# EUROPÄISCHE PATENTSCHRIFT

(11) **EP 4 588 344 B1**
(45) Veröffentlichungstag und Bekanntmachung des Hinweises auf die Patenterteilung: **01.04.2026**
(21) Anmeldenummer: 25152549.9
(22) Anmeldetag: 17.01.2025
(51) Int. Cl.: A01K 5/01, A01K 39/012

(54) **NAHRUNGSMITTELAUTOMAT FÜR KLEINTIERE, INSBESONDERE HÜHNER**
FOOD DISPENSER FOR SMALL ANIMALS, IN PARTICULAR CHICKENS
DISTRIBUTEUR AUTOMATIQUE D'ALIMENTS POUR PETITS ANIMAUX, NOTAMMENT DES POULES

(30) Priorität: 19.01.2024 DE 102024101616
(43) Veröffentlichungstag der Anmeldung: 23.07.2025
(73) Patentinhaber: Albert Kerbl GmbH, 84428 Buchbach (DE)
(72) Erfinder: Kerbl, Ulli, 84428 Buchbach (DE)
(74) Vertreter: Kalkoff & Partner Patentanwälte mbB

(56) Entgegenhaltungen:
- CN-A- 106 912 401
- US-A- 1 790 045
- US-B1- 6 427 629
- US-B1- 6 866 004

## Beschreibung

Die Erfindung betrifft einen Nahrungsmittelautomaten für Kleintiere, insbesondere Hühner, mit
- einem haubenförmigen Vorratsbehälter mit einem Innenraum, der durch eine umlaufende Seitenwand, einen einerseits stirnseitig an die Seitenwand anschließenden Behälterboden und eine dem Behälterboden gegenüberliegende Öffnung begrenzt ist und
- einem in einer Gebrauchsposition die Öffnung überdeckend lösbar an dem Vorratsbehälter anordbaren Deckelelement mit einer den Vorratsbehälter in der Gebrauchsposition im Bereich der Öffnung zumindest abschnittsweise umgebenden Entnahmerinne, deren Außenwand sich in der Gebrauchsposition bevorzugt über eine durch die Öffnung gebildete Ebene hinaus in Richtung auf den Behälterboden erstreckt und einem die Entnahmerinne mit dem Innenraum verbindenden Verbindungsabschnitt.

Nahrungsmittelautomaten wie Hühnertränken oder Hühnerfuttermittelspender sind in vielfältigen Ausgestaltungen aus dem Stand der Technik bekannt. So offenbart die CN 106912401 A einen gattungsgemäßen Nahrungsmittelautomaten für Kleintiere. Zusammenklappbare Futterautomaten für Vögel, Eichhörnchen und dergleichen, die die Aufgabe angehen, einen Nahrungsmittelautoamten für Kleintiere bereitzustellen, welcher zum Transport eine kompakte Bauform aufweisen, sind aus der US 6,866,004 B1, US 6,427,629 B1 und US 1,790,045 A bekannt. Deren Vorratsbehälter dient dabei bspw. zur Bevorratung eines rieselfähigen Futters oder im Falle der Verwendung als Hühnertränke zur Bevorratung von Wasser. Der Vorratsbehälter wird im Bereich seiner dem Behälterboden gegenüberliegenden Öffnung mit einem Deckelelement verbunden, welches dazu dient, das in dem Vorratsbehälter angeordnete Nahrungsmittel zu speichern, sodass dieses in der Gebrauchsposition des Nahrungsmittelautomaten in vorgesehener Weise den Kleintieren, bspw. Hühnern in einer den Vorratsbehälter zumindest abschnittsweise umgebenden Entnahmerinne bereitgestellt wird. Im Falle der Ausgestaltung des Nahrungsmittelautomaten als Hühnertränke schließt das Deckelelement die Öffnung des Vorratsbehälters weitestgehend flüssigkeitsdicht ab. Zur Befüllung der Entnahmerinne mit Wasser aus dem Vorratsbehälter weist das Deckelelement ferner einen den Innenraum mit der Entnahmerinne verbindenden Verbindungsabschnitt auf. Dieser Verbindungsabschnitt, der bspw. durch eine Aussparung im Kontaktbereich des Deckelelements mit dem umlaufenden Rand der Öffnung des Vorratsbehälters gebildet werden kann, ist dabei in der Gebrauchsposition, in der der Vorratsbehälter oberhalb des Deckelements angeordnet ist, sodass sich das im Vorratsbehälter befindliche Nahrungsmittel aufgrund der Schwerkraft in die Entnahmerinne bewegen kann, unterhalb eines äußeren umlaufenden Rands der Entnahmerinne angeordnet, wodurch gewährleistet wird, dass flüssige Nahrungsmittel, wie bspw. Wasser, nicht über den Rand der Entnahmerinne aus dem Vorratsbehälter herausfließt.

Auch bei der Verwendung des Nahrungsmittelautomaten als Hühnerfuttermittelspender ist in der Gebrauchsposition, in der das Deckelelement die Öffnung des Vorratsbehälters überdeckt, die Außenwandung der Entnahmerinne oberhalb des die Entnahmerinne mit dem Innenraum verbindenden Verbindungsabschnitt angeordnet, um so einem unkontrollierten Austritt des üblicherweise rieselfähigen Futtermittels aus dem Vorratsbehälter vorzubeugen. Die Ausgestaltung des Verbindungsabschnitts ist dabei grundsätzlich frei wählbar.

Der zunehmende Trend zur Heimtiernutzhaltung, insbesondere zur Hühnerhaltung hat den Bedarf an Nahrungsmittelautomaten für Kleintiere in erheblichem Maße gesteigert. Um den Bedarf an Nahrungsmittelautomaten zu decken, werden diese im umfangreichen Rahmen von dem Hersteller an Großhändler und von diesem an Einzelhändler versandt, wo diese von Kunden erworben werden können. Bekannte Nahrungsmittelautomaten der eingangs genannten Art weisen den Nachteil auf, dass diese, insbesondere aufgrund der Abmessungen des Deckelelements gemeinsam mit einem voluminösen Vorratsbehälter in einer für den Transport vorgesehenen Zusammenstellung einen großen Raumbedarf aufweisen, was zu erheblichen Transportkosten sowie Kosten für Verpackungsmaterial zur Zusammenfassung der Bauteile des Nahrungsmittelautomaten führt.

Hiervon ausgehend liegt der Erfindung die Aufgabe zugrunde, einen Nahrungsmittelautomaten für Kleintiere bereitzustellen, welcher zum Transport eine kompakte Bauform aufweist sowie nur geringe Verpackungskosten verursacht.

Die Erfindung löst die Aufgabe durch einen Nahrungsmittelautomaten mit den Merkmalen des Anspruchs 1. Vorteilhafte Weiterbildungen der Erfindung sind in den abhängigen Ansprüchen angegeben.

Kennzeichnend für den erfindungsgemäßen Nahrungsmittelautomaten für Kleintiere, insbesondere Hühner ist, dass das Deckelelement und der Vorratsbehälter in ihren Abmessungen derart aufeinander abgestimmt sind, dass das Deckelelement in einer Transportposition innerhalb des Innenraums positionierbar ist.

Erfindungsgemäß ist demnach vorgesehen, dass der Vorratsbehälter sowie das Deckelelement in ihren Abmessungen derart aufeinander abgestimmt sind, dass das Deckelelement zum Transport des Nahrungsmittelautomaten in der Transportposition innerhalb des Innenraums positionierbar ist. Durch die erfindungsgemäße Ausgestaltung des Nahrungsmittelautomaten besteht die Möglichkeit, den Vorratsbehälter als Transportbehältnis für das Deckelelement sowie ggf. vorhandener weiterer Anbauteile des Nahrungsmittelautomaten zu verwenden, welche derart innerhalb des Innenraums zum Transport angeordnet werden können, dass der Vorratsbehälter als alleiniger Transportbehälter dient, in dem alle Bauteile des Nahrungsmittelautomaten zuverlässig aufgenommen werden können.

Zum Versand der erfindungsgemäßen Nahrungsmittelautomaten besteht nach der Anordnung der Anbauteile des Nahrungsmittelautomaten wie mindestens des Deckelelements die Möglichkeit, den Innenraum nach Anordnung des Deckelelements in diesem mit einem Verschlussmittel bspw. mit einem "Einweg-Kartondeckel", einer selbstklebenden Banderole oder dergleichen zu verschließen, wodurch eine kompakte Versendung des Nahrungsmittelautomaten möglich ist. Weitere Verpackungsmittel sind nicht erforderlich.

Vor der Nutzung des Nahrungsmittelautomaten muss der Nutzer lediglich die Öffnung durch Entfernung des Verschlussmittels freilegen und kann dann die Anbauteile, d. h. zumindest das Deckelelement aus dem Innenraum entnehmen und den Nahrungsmittelautomaten zur Verwendung zusammenbauen.

Die Formgebung des Deckelelements mit einer den Vorratsbehälter im Bereich seiner Öffnung zumindest abschnittsweise umgebenden Entnahmerinne sowie des Vorratsbehälters derart, dass das Deckelelement in der erfindungsgemäßen Weise in der Transportposition innerhalb des Innenraums des Vorratsbehälters positionierbar ist, ist grundsätzlich frei wählbar. Erfindungsgemäß wesentlich ist dabei, dass das Deckelelement und der Vorratsbehälter derart aufeinander abgestimmt sind, dass das Deckelelement in der Transportposition so innerhalb des Vorratsbehälters angeordnet werden kann, dass es nicht ungewollt aus diesem herausgelangt. Eine solche verliersichere Anordnung wird bevorzugt dann erreicht, wenn das Deckelelement überwiegend innerhalb des Vorratsbehälters angeordnet ist und abschnittsweise, d. h. mit bis zu 50%, vorzugsweise mit bis zu 40 %, bevorzugt mit bis zu 30%, besonders bevorzugt mit bis zu 20%, insbesondere mit bis zu 10%, ganz besonders bevorzugt mit bis zu 5% seiner Länge aus der Öffnung aus dem Vorratsbehälter herausragt. Bevorzugt ragt das Deckelelement in der Transportposition dabei nicht seitlich über die Seitenwand hinaus. Durch geeignete Verschlussmittel, wie bspw. geeignete Klebebanderolen kann dann eine transportsichere Zusammenstellung gewährleistet werden.

Denkbar ist auch die Ausgestaltung von Deckelelement und Vorratsbehälter in einer kreisrunden Form. Im Falle einer von einer kreisrunden Form abweichenden Ausgestaltung von Deckelelement und Vorratsbehälter ist nach einer Weiterbildung der Erfindung vorgesehen, dass
- der Abstand zwischen dem Behälterboden und der Öffnung in Längsachsenrichtung des Vorratsbehälters größer ist als die Länge des Deckelelements und
- die Seitenwände des Vorratsbehälters senkrecht zu dessen Längsachsenrichtung zumindest abschnittsweise einen Abstand voneinander aufweisen, der größer ist als die Breite des Deckelelements.

Unter der Länge des Deckelelements wird dessen größte Ausdehnung quer zur Längsachsenrichtung des Vorratsbehälters in der Gebrauchsposition verstanden. Die Breite des Deckelelements entspricht demnach der größten Ausdehnung des Deckelelements senkrecht zu dessen Erstreckung in Längenrichtung in der Gebrauchsposition. Durch diese Ausgestaltung der Erfindung wird gewährleistet, dass das Deckelelement in der Transportposition vollständig innerhalb des Innenraums des Vorratsbehälters positionierbar ist. Hierdurch wird erreicht, dass in der Transportposition das Deckelelement nicht abschnittsweise über die Öffnung des Vorratsbehälters aus diesem vorsteht, sodass eine besonders kompakte Ausgestaltung des Nahrungsmittelautomaten in der Transportposition und damit zu dessen Versand möglich ist.

Der Vorratsbehälter und das Deckelelement können grundsätzlich auch einen beliebigen, aufeinander abgestimmten polygonalen Querschnitt aufweisen. Nach einer besonders vorteilhaften Ausgestaltung ist jedoch vorgesehen, dass der Vorratsbehälter und das Deckelelement einen im Wesentlichen rechteckigen Querschnitt aufweisen, wobei der Abstand der Seitenwände im Bereich einer senkrecht zur Längsachse des Vorratsbehälters verlaufenden Diagonalen durch den durch zwei Längsseitenwände und zwei Kurzseitenwände gebildeten Vorratsbehälter größer ist, als die Breite des Deckelelements.

Die rechteckige Ausgestaltung des Vorratsbehälters und des Deckelelements ermöglicht es, insbesondere aufgrund der rechteckigen Ausgestaltung des Vorratsbehälters, eine Vielzahl von Nahrungsmittelautomaten in der Transportposition in kompakter Weise auf bspw. einer Palette anzuordnen oder in Versandkartons zu positionieren. Die vorteilhafterweise vorgesehene Ausgestaltung des Vorratsbehälters derart, dass dessen Diagonale größer ist als die Breite des Deckelements erlaubt überdies eine kompakte Bauform des Vorratsbehälters, wobei gleichzeitig gewährleistet wird, dass das Deckelelement in der Transportposition lagesicher innerhalb des Innenraums des Vorratsbehälters angeordnet werden kann. Die Länge des Deckelelements kann dabei wahlweise so gewählt werden, dass dieses in der Transportposition vollständig innerhalb des Vorratsbehälters angeordnet ist oder abschnittsweise aus der Öffnung vorsteht.

Grundsätzlich besteht bei einer entsprechenden Ausgestaltung des Deckelelements die Möglichkeit, dieses dazu zu nutzen, um den Nahrungsmittelautomaten an geeigneter Stelle, bspw. einem Boden aufzustellen. Nach einer weiteren Ausgestaltung der Erfindung sind jedoch lösbar mit dem Deckelelement verbindbare Stützelemente vorgesehen. Bei den Stützelementen handelt es sich bspw. um Stützfüße, welche in der Gebrauchsposition des Nahrungsmittelautomaten an der dem Vorratsbehälter abgewandten Unterseite des Deckelelements angebracht, bspw. in entsprechende Öffnungen in diesen eingesteckt sind. So können nach dieser Weiterbildung der Erfindung bspw. vier fußartige Stützelemente vorgesehen sein, die bei einem rechteckig ausgestalteten Deckelelement im Bereich der Ecken angeordnet sind und so ein Aufstellen des Nahrungsmittelautomaten in einer zur Nahrungsaufnahme der Tiere geeigneten Höhe ermöglichen. Die lösbare Anordnung der Stützelemente erlaubt es dabei, diese zum Transport von diesen zu entfernen bzw. diese gemeinsam mit dem Vorratsbehälter und dem Deckelelement in kompakter Weise zu transportieren.

Nach einer weiteren Ausgestaltung der Erfindung ist ferner vorgesehen, dass der Behälterboden eine Bodenöffnung aufweist, die mittels eines lösbar mit dem Vorratsbehälter verbindbaren Verschlusselement verschließbar ist. Gemäß dieser Ausgestaltung der Erfindung ist der in der Gebrauchslage die Oberseite des Nahrungsmittelautomaten bildende Behälterboden mit einer Öffnung versehen, die bspw. zum Befüllen des Innenraums mit einem Nahrungsmittel verwendet werden kann. Nach dem Befüllvorgang kann dann die Bodenöffnung mittels des Verschlusselements verschlossen werden, um den Innenraum vor Verunreinigungen zu schützen. Diese Ausgestaltung der Erfindung ermöglicht ein einfaches Nachfüllen des Vorratsbehälters, ohne dass hierfür ein Anheben des Nahrungsmittelautomaten und ein Entfernen des Deckelements zur Erlangung eines Zugangs zur Öffnung des Vorratsbehälters erforderlich ist.

Nach einer weiteren Ausgestaltung der Erfindung ist ferner vorgesehen, dass der Vorratsbehälter im Bereich des Behälterbodens einen lösbar mit dem Vorratsbehälter verbindbaren Tragegriff aufweist. Diese Ausgestaltung der Erfindung erlaubt eine einfache Handhabung und Platzierung des Nahrungsmittelautomaten in einer für den Einsatzzweck gewünschten Position. Eine lösbare Anordnung des Tragegriffs erlaubt es dabei, diesen erst nach dem Transport an dem Vorratsbehälter zu montieren, sodass Beschädigungen des Tragegriffs während des Transports wirksam vorgebeugt wird.

Besonders vorteilhafterweise ist dabei vorgesehen, dass der Innenraum zur Aufnahme des Verschlusselements und/oder der Stützelemente und/oder des Tragegriffs in der Transportposition ausgebildet ist. Diese Ausgestaltung der Erfindung ermöglicht es, neben der Anordnung des Deckelelements in dem Innenraum zum Transport des Nahrungsmittelautomaten auch das Verschlusselement, die Stützelemente und/oder den Tragegriff transportsicher in dem Innenraum anzuordnen. Besonders bevorzugt erfolgt die Anordnung derart, dass dass diese nicht über die Öffnung aus dem Vorratsbehälter herausragen, sodass die Öffnung in einfacher Weise zum Transport verschlossen und der Vorratsbehälter dann mit den ggf. vorhandenen weiteren Bauteilen des Nahrungsmittelautomaten in kompakter Weise versendet werden kann.

Die Ausgestaltung der den Vorratsbehälter im Bereich der Öffnung umgebenden Entnahmerinne des Deckelelements ist grundsätzlich frei wählbar. Nach einer besonders vorteilhaften Ausgestaltung der Erfindung ist jedoch vorgesehen, dass die Entnahmerinne den Vorratsbehälter im Bereich der Öffnung vollständig umschließt. Diese Ausgestaltung der Erfindung erlaubt den Tieren in der Gebrauchsposition des Nahrungsmittelautomaten einen allseitigen Zugang zu der durch den Nahrungsmittelautomaten bereitgestellten Nahrung. Die Außenwand der Entnahmerinne erstreckt sich dabei in der Gebrauchsposition vollständig über eine durch die Öffnung gebildete Ebene in Richtung auf den Behälterboden, sodass gewährleistet ist, dass das Nahrungsmittel nicht unkontrolliert über die Entnahmerinne aus dem Vorratsbehälter herausgelangt.

Die Ausgestaltung der Verbindung des Deckelelements mit dem Vorratsbehälter zum Gebrauch des Nahrungsmittelautomaten ist grundsätzlich frei wählbar. Nach einer besonders vorteilhaften Ausgestaltung der Erfindung ist vorgesehen, dass das Deckelelement einen Anschlussabschnitt aufweist, der zur lösbaren Befestigung des Deckelelements an dem Vorratsbehälter in der Gebrauchsposition ausgebildet ist. Der Anschlussabschnitt des Deckelelements stellt dabei den Bereich des Deckelelements dar, mit dem dieser mit dem Vorratsbehälter im Bereich der Öffnung in Wirkverbindung gelangt. Die lösbare Befestigung des Anschlussabschnitts an dem Vorratsbehälter ermöglicht es, das Deckelelement in einfacher Weise zum Gebrauch an dem Vorratsbehälter zu montieren bzw. diesen nach dem Gebrauch voneinander zu trennen. Dies kann zu dem Zweck erfolgen, den Nahrungsmittelautomaten zu lagern oder diesen zu Befüllen.

Die Ausgestaltung des Anschlussabschnitts derart, dass dieser lösbar mit dem Vorratsbehälter in der Gebrauchsposition verbindbar ist, ist dabei grundsätzlich frei wählbar. Nach einer besonders vorteilhaften Ausgestaltung der Erfindung ist jedoch vorgesehen, dass der Anschlussabschnitt Kopplungselemente zur formschlüssigen Verbindung des Deckelelements an dem Vorratsbehälter in der Gebrauchsposition aufweist. Durch die Kopplungselemente besteht somit in einfacher Weise die Möglichkeit, das Deckelelement zuverlässig in der Gebrauchsposition an dem Vorratsbehälter festzulegen. Die formschlüssige Verbindung sichert dabei das Deckelelement zuverlässig gegen ein ungewolltes Verschieben gegenüber dem Vorratsbehälter, sodass gewährleistet ist, dass der Nahrungsmittelautomat zuverlässig zur Bereitstellung von Nahrungsmitteln für Kleintiere, insbesondere Hühner, verwendet werden kann.

Besonders vorteilhafter Weise ist dabei vorgesehen, dass die Kopplungselemente, welche grundsätzlich in beliebiger Weise ausgestaltet sein können, durch Halter gebildet sind, die mit einer nutförmigen Ausnehmung zur Aufnahme von Haltestegen an dem Vorratsbehälter ausgebildet sind. Die nutförmigen, sich bevorzugt senkrecht zur Längsachse des Vorratsbehälters erstreckenden Ausnehmungen erlauben es, das Deckelelement durch eine vorzugsweise - mit Bezug auf die Gebrauchsposition - horizontale Verschiebung des Deckelelements relativ zum Vorratsbehälter mit dem Vorratsbehälter zu verbinden und in der Gebrauchsposition anzuordnen.

Die durch die nutförmigen Ausnehmungen und die entsprechenden, an dem Vorratsbehälter angeordneten Stege hergestellte Verbindung erlaubt dabei eine zuverlässige Lagesicherung des Deckelements an dem Vorratsbehälter. Einem versehentlichen Lösen des Deckelements von dem Vorratsbehälter wird dadurch in besonders zuverlässiger Weise vorgebeugt.

Die Ausgestaltung des Anschlussabschnitts, welches den Innenraum mit der Entnahmerinne verbindet, ist grundsätzlich frei wählbar. Nach einer besonders vorteilhaften Ausgestaltung der Erfindung ist jedoch vorgesehen, dass der Anschlussabschnitt in der Gebrauchsposition beabstandet von dem umlaufenden Rand der Öffnung angeordnet ist.

Diese Ausgestaltung der Erfindung, bei der bevorzugt der Rand der Öffnung weitestgehend, unter Umständen unterbrochen durch eine oder mehrere Stützstreben, von dem Anschlussabschnitt des Deckelelements entfernt angeordnet ist, gewährleistet, dass in dem Innenraum des Vorratsbehälters angeordnetes Nahrungsmittel gleichmäßig in die vorzugsweise umlaufend um den Vorratsbehälter herum angeordnete Entnahmerinne gelangen kann. Eine entsprechende Ausgestaltung des Verbindungsabschnitts empfiehlt sich insbesondere bei rieselfähigen Nahrungsmitteln, wie bspw. losem Hühnerfutter, welches innerhalb des Innenraums des Vorratsbehälters angeordnet auf diese Weise zuverlässig in die umlaufende Entnahmerinne gelangen kann.

Nach einer besonders vorteilhaften Ausgestaltung der Erfindung ist dabei vorgesehen, dass der Anschlussabschnitt einen in der Gebrauchsposition pyramidenförmig in Richtung auf die Öffnung vorstehenden Bereich aufweist, wodurch eine gerichtete Förderung eines rieselfähigen Nahrungsmittels in die vorzugsweise umlaufende Entnahmerinne in ergänzender Weise gewährleistet wird. Insbesondere wird durch diese Ausgestaltung vermieden, dass sich das Futtermittel in einem Bereich unterhalb der Öffnung des Vorratsbehälters - bezogen auf die Gebrauchsposition - sammelt und nicht von dort in die Entnahmerinne gelangt.

Nach einer weiteren Ausgestaltung der Erfindung ist vorgesehen, dass der Anschlussabschnitt dazu ausgebildet ist, in der Gebrauchsposition
- den Vorratsbehälter flüssigkeitsdicht zu verschließen und
- den Innenraum mit der Entnahmerinne über einen als Ausnehmung ausgebildeten Verbindungsabschnitt flüssigkeitsleitend zu verbinden.

Diese Ausgestaltung der Erfindung gewährleistet bei der Verwendung des Nahrungsmittelautomaten als Tränke in besonders zuverlässiger Weise, dass in dem Vorratsbehälter angeordnete Flüssigkeiten einerseits zuverlässig über die Ausnehmung aus dem Innenraum in die Entnahmerinne gelangen, gleichzeitig jedoch verhindert wird, dass Flüssigkeit unkontrolliert aus dem Vorratsbehälter ausströmt. Ein Nachfließen der Flüssigkeit aus dem Innenraum des Vorratsbehälters in die Entnahmerinne erfolgt nur dann, wenn durch eine Entnahme von Flüssigkeiten aus der Entnahmerinne der Flüssigkeitsstand unterhalb des oberen Rands der Ausnehmung - bezogen auf die Gebrauchsposition - absinkt, wodurch Luft in den Innenraum nachströmen und Flüssigkeit in die Entnahmerinne nachfließen kann, bis die Ausnehmung wieder vollständig durch in der Entnahmerinne angeordnete Flüssigkeit überdeckt ist. Die umlaufend flüssigkeitsdichte Anordnung des Deckelelements an dem Vorratsbehälter gewährleistet dabei in besonders zuverlässiger Weise, dass ein gleichmäßiger Flüssigkeitsstand in der Entnahmerinne beibehalten wird.

Besonders vorteilhafterweise ist dabei vorgesehen, dass der Anschlussabschnitt einen in der Gebrauchsposition über die Öffnung in Richtung auf die Abdeckung umlaufenden Randkörper aufweist. Die Verwendung eines Randkörpers gewährleistet in ergänzender Weise eine flüssigkeitsdichte Anordnung des Deckelelements an dem Vorratsbehälter und gewährleistet, dass die Flüssigkeit nur in kontrollierter Weise über die vorzugsweise vorgesehene Ausnehmung aus dem Innenraum in die Entnahmerinne gelangt.

Ausführungsbeispiele der Erfindung werden nachstehend mit Bezug auf die Zeichnungen erläutert. in den Zeichnungen zeigen:
- Fig. 1: in einer perspektivischen Ansicht eine Explosionsdarstellung eines als Hühnertränke ausgebildeten Nahrungsmittelautomaten;
- Fig. 2: eine perspektivische Darstellung der Hühnertränke von Fig. 1 in einer Gebrauchsposition;
- Fig. 3: in einer perspektivischen Darstellung die demontierte Hühnertränke von Fig. 1 in einer Transportposition;
- Fig. 4: eine Ansicht eines Schnitts der Hühnertränke von Fig. 1;
- Fig. 5: in einer perspektivischen Ansicht eine Explosionsdarstellung eines als Hühnerfuttermittelspender ausgebildeten Nahrungsmittelautomaten;
- Fig. 6: eine perspektivische Darstellung des Hühnerfuttermittelspenders von Fig. 5 in der Gebrauchsposition;
- Fig. 7: in einer perspektivischen Darstellung der demontierte Hühnerfuttermittelspender von Fig. 5 in einer Transportposition und
- Fig. 8: eine Ansicht eines Schnitts des Hühnerfuttermittelspenders von Fig. 5.

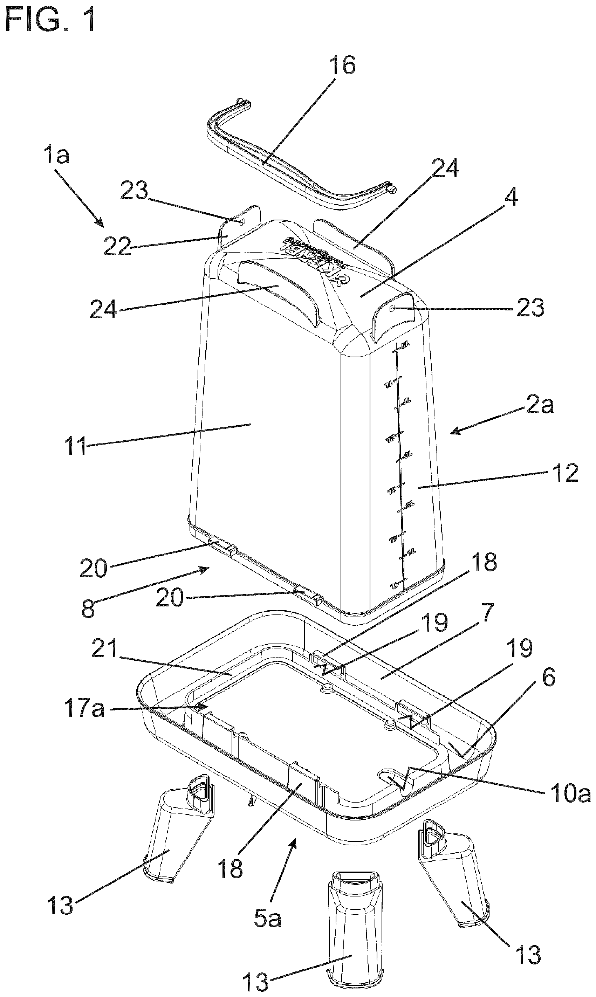

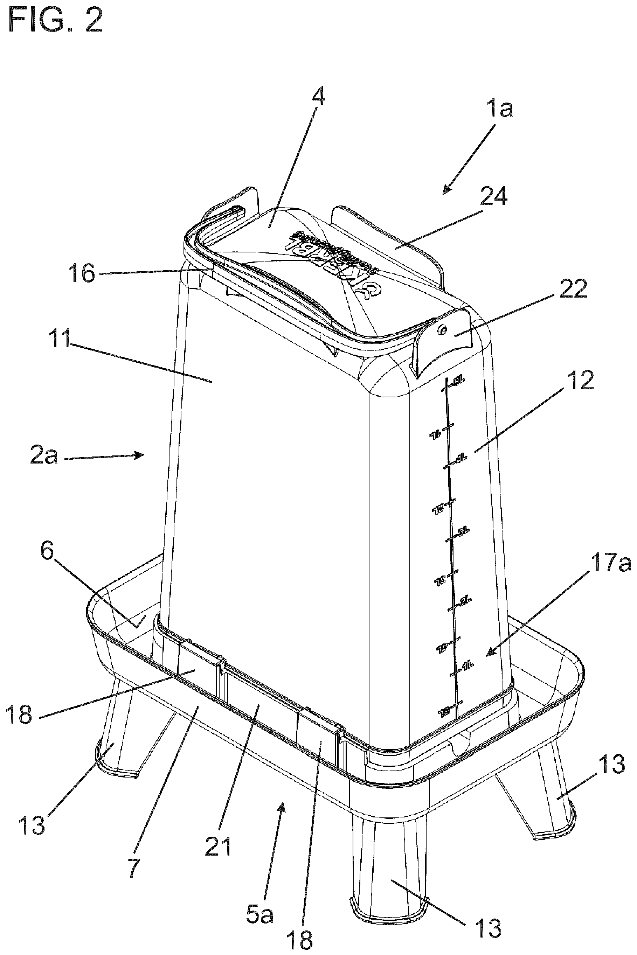

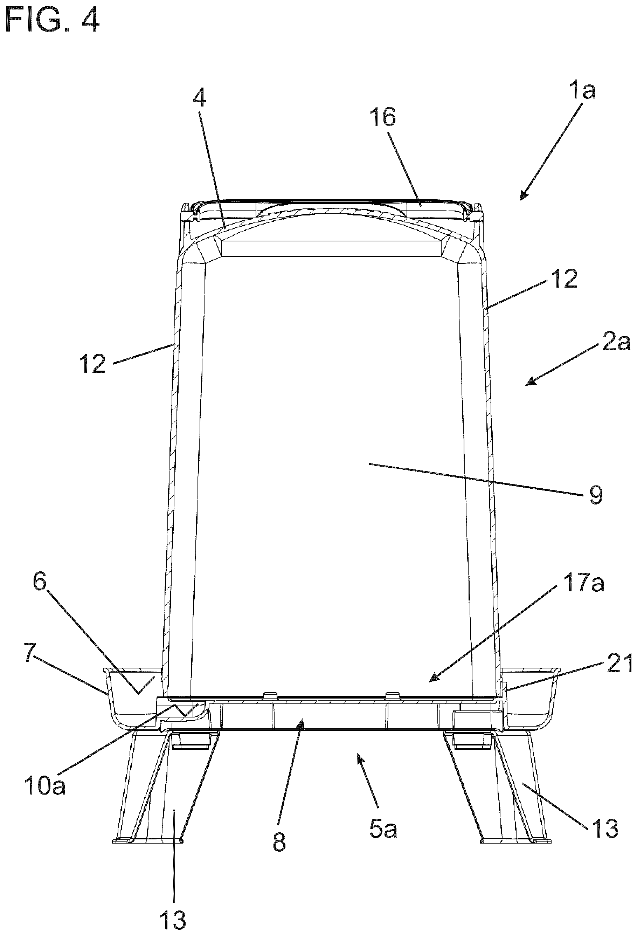

In den Figuren 1 bis 4 ist eine erste Ausführungsform eines Nahrungsmittelautomaten dargestellt, bei der dieser als Hühnertränke 1a ausgebildet ist. Die Hühnertränke 1a weist dabei mehrere Bauteile, nämlich einen Vorratsbehälter 2a, ein Deckelelement 5a, vier Stützelemente 13 sowie einen Tragegriff 16 auf. Zur Montage der Hühnertränke 1a, sodass diese in der in Figur 2 dargestellten Gebrauchsposition genutzt werden kann, wird zunächst der Tragegriff 16 mit dem Vorratsbehälter 2a verbunden. Hierzu sind an dem Vorratsbehälter 2a im Bereich des Behälterbodens 4 an die kurzen Seitenwände 12 anschließend einander gegenüberliegend zwei Laschen 22 angeordnet, die zur Aufnahme von Zapfen des Tragegriffs 16 jeweils eine Aussparung 23 aufweisen.

Die Laschen 22 bilden gemeinsam mit den an den einander gegenüberliegenden Längsseitenwänden 11 im Bereich des Behälterbodens 4 angeordneten Stützstegen 24 eine Ebene, auf die der Vorratsbehälter zur Befüllung aufgestellt werden kann, sodass Flüssigkeit über eine Öffnung 8 des Vorratsbehälters 2a in den Innenraum 9 eingefüllt werden kann.

Nach der Anordnung der Flüssigkeit in den Innenraum 9 wird zur Vorbereitung der Nutzung der Hühnertränke 1a das Deckelement 5a im Bereich der Öffnung 8 mit dem Vorratsbehälter 2a verbunden. Der Vorratsbehälter 2a weist hierzu im Bereich der Öffnung 8 seitlich von den Längsseitenwänden 11 vorstehende Haltestege 20 auf, die in der in Figur 2 dargestellten Gebrauchsposition des Deckelements 5a an dem Vorratsbehälter 11 in nutförmige Ausnehmungen 19 in als Halter 18 ausgebildete Kopplungselemente an dem Deckelement 5a eingeschoben sind. Die Halter 18 erstrecken sich dabei in einem Anschlussabschnitt 17a des Deckelelements 5a - bezogen auf die Gebrauchsposition - in Richtung auf den Vorratsbehälter. Die Halter 18 schließen dabei überdies an einen Randkörper 21 des Anschlussabschnitts 17a an, welcher in der Gebrauchsposition an den beiden Längsseitenwänden 11 sowie einer Kurzseitenwand 12 anliegt, wobei die Kurzseitenwand 12 die Einschubtiefe der Haltestege 20 in die Ausnehmungen 19 begrenzt.

An der Kurzseitenwand 12, welche der Kurzseitenwand 12 gegenüberliegt, die an dem Randkörper 21 anliegt, weist der Anschlussabschnitt 17a eine Ausnehmung 10a auf, welche einen Verbindungsabschnitt zwischen dem Innenraum 9 und einer Entnahmerinne 6 des Deckelements 5a bildet, wobei die Entnahmerinne 6 in der Gebrauchsposition den Vorratsbehälter 2a im Bereich der Öffnung 8 umläuft. In der Gebrauchsposition, in der der Vorratsbehälter 2a im Bereich des Anschlussabschnitts 17a mit Ausnahme des Bereichs der Ausnehmungen 10a flüssigkeitsdicht an dem Deckelelement 5b angeordnet ist, gelangt Flüssigkeit kontrolliert über die Ausnehmung 10a aus dem Innenraum 9 in die Entnahmerinne 6. Eine Außenwand 7 der Entnahmerinne 6 erstreckt sich dabei in Längsachsenrichtung des Vorratsbehälters 2a über eine durch die Öffnung 8 des Vorratsbehälters 2a gebildete Ebene in Richtung auf den Behälterboden 4, wodurch verhindert wird, dass Flüssigkeit aus dem Innenraum 9 über die Außenwand 7 der Entnahmerinne 6 hinaus austritt. Flüssigkeit aus dem Innenraum 9 tritt nur dann in die Entnahmerinne 6 ein, wenn der Flüssigkeitsstand in der Entnahmerinne 6 unterhalb - bezogen auf die Gebrauchsposition - der durch die Öffnung 8 gebildeten Ebene angeordnet ist.

Um die Hühnertränke 1a in einer geeigneten Position zuverlässig aufstellen zu können, weist diese ferner vier Stützelemente 13 auf, welche in hier nicht dargestellte Öffnungen an der Unterseite des Deckelelements 5a einschiebbar sind.

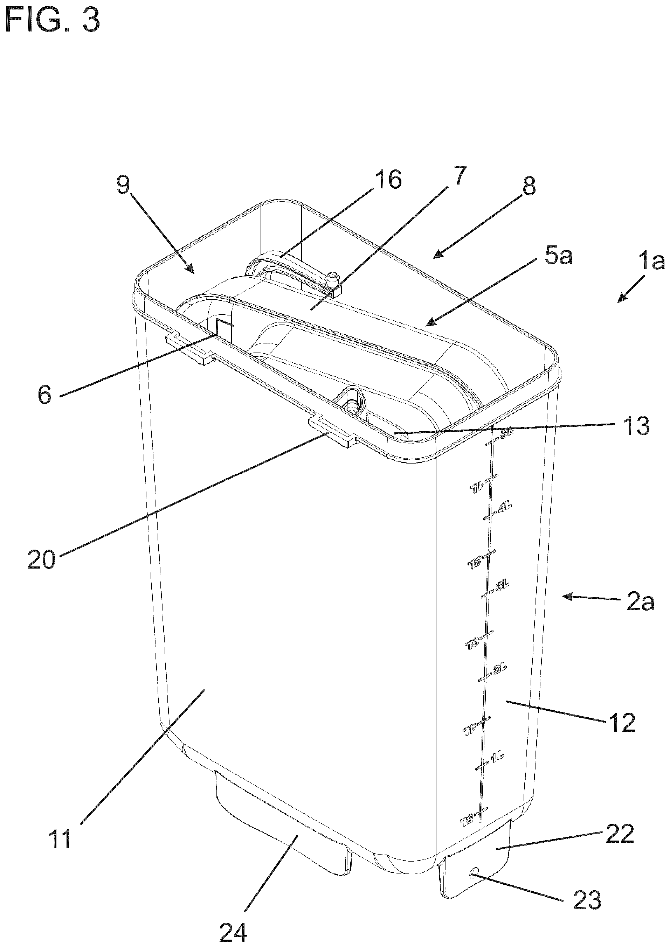

Die Abmessungen des Vorratsbehälters 2a, insbesondere die Dimensionen des Innenraums 9 und die Abmessungen des Deckelelements 5a sind so aufeinander abgestimmt, dass das Deckelelement 5a sowie der Tragegriff 16 und die Stützelemente 13 gemeinsam in einer in Figur 3 dargestellten Transportposition derart innerhalb des Innenraums 9 des Vorratsbehälters 2a angeordnet werden können, dass diese nicht über die durch die Öffnung 8 gebildete Ebene aus dem Vorratsbehälter 2a herausragen.

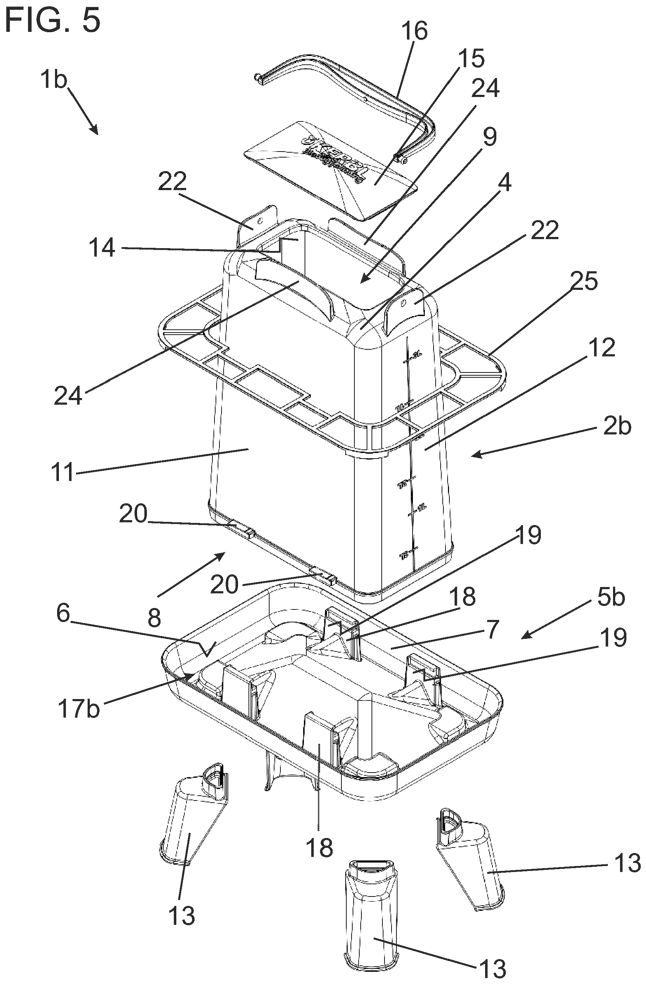

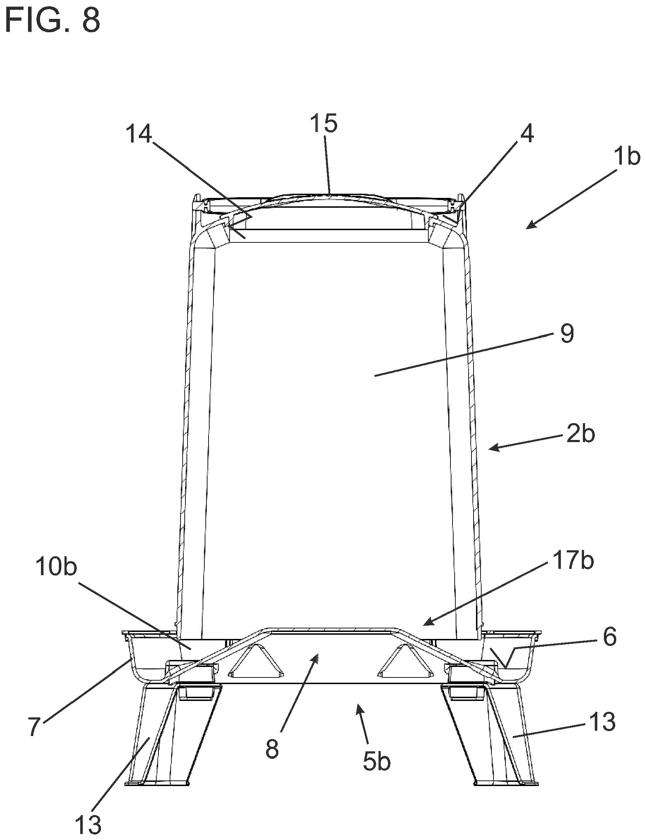

Die Figuren 5 bis 8 zeigen eine weitere Ausführungsform des Nahrungsmittelautomaten, bei der dieser als Hühnerfuttermittelspender 1b ausgebildet ist. Wie auch in der in den Figuren 1 bis 4 dargestellten Ausgestaltung des Nahrungsmittelautomaten als Hühnertränke 1a so weist auch der Hühnerfuttermittelspender 1b einen Vorratsbehälter 2b, ein Deckelelement 5b, einen Tragegriff 16 sowie vier Stützelemente 13 auf. Zusätzlich weist der Hühnerfuttermittelspender 1b ein Verschlusselement 15 auf, welches dazu dient, eine in den Behälterboden 4 eingebrachte Bodenöffnung 14 nach einer Befüllung des Innenraums 9 zu verschließen.

Darüber hinaus weist der Hühnerfuttermittelspender 1b abweichend zu der in den Figuren 1 bis 4 dargestellten Hühnertränke 1a ein Gitter 25 auf, welches in der Gebrauchsposition die Entnahmerinne 6 überdeckt und dabei eine gleichmäßige Verteilung eines rieselfähigen Hühnerfutters unterstützt.

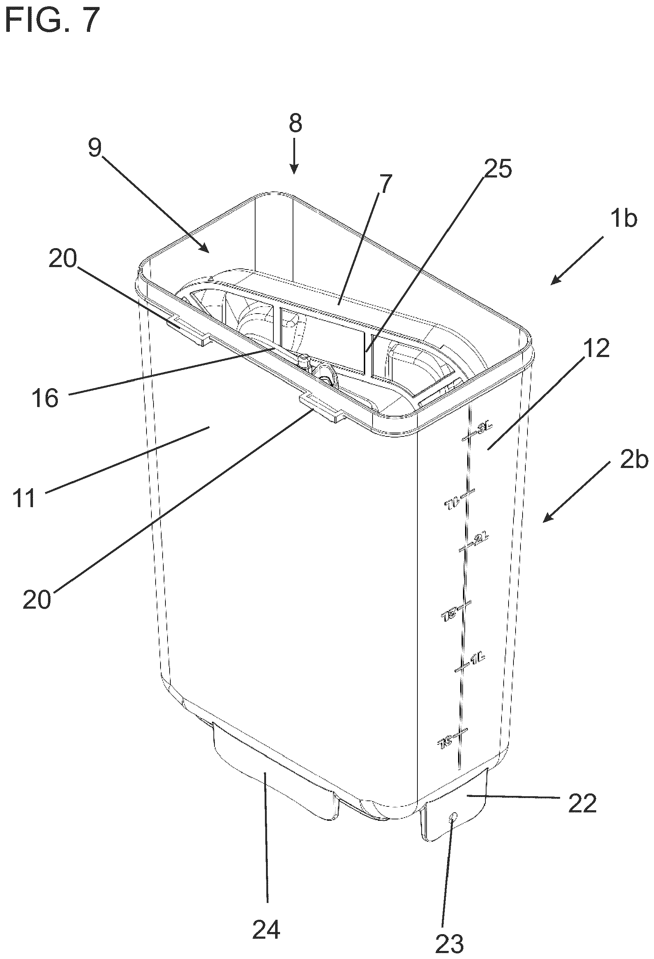

Wie auch bei der in den Figuren 1 bis 4 dargestellten Hühnertränke 1a, so sind auch sämtliche Bestandteile des Hühnerfuttermittelspenders 1b in der in Figur 7 dargestellten Transportposition innerhalb des Innenraums 9 des Vorratsbehälters 2b anordbar, wobei die Bauteile in der Transportposition nicht über die Öffnung 8 aus dem Vorratsbehälter 2b herausragen.

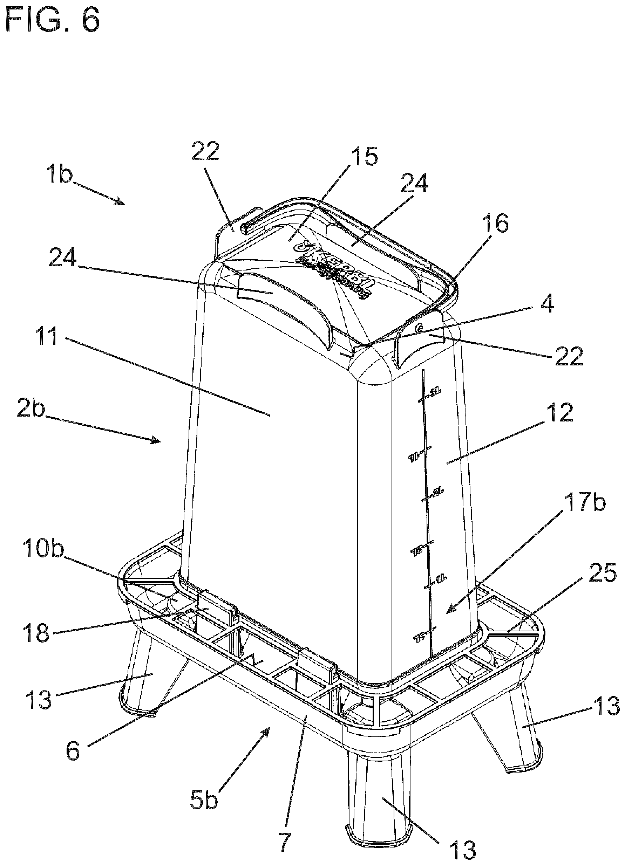

Das Deckelement 5b weist aufgrund der Verwendung des Hühnerfuttermittelspenders 1b zur Bereitstellung von rieselfähigem Hühnerfutter eine andere Ausgestaltung als das Deckelement 5a auf. Das Deckelelement 5b unterscheidet sich dadurch von dem Deckelelement 5a, dass der Anschlussabschnitt 17b keinen umlaufenden Randkörper 21 sowie keine ebene Fläche zur flüssigkeitsdichten Verbindung des Deckelements 5a mit dem Vorratsbehälter 2a aufweist. Das Deckelelement 5b ist im Bereich des Anschlussabschnitts 17b derart ausgebildet, dass der umlaufende Rand der Öffnung 8 in der in Figur 6 dargestellten Gebrauchsposition im Abstand von dem Deckelelement 5b angeordnet, sodass das Hühnerfutter aus dem Innenraum 9 zuverlässig in die Entnahmerinne 6 gelangt. Hierzu ist ergänzend der Anschlussabschnitt 17b pyramidenförmig, nämlich mit in Richtung auf die Entnahmerinne 6 hin abfallende Flächen ausgebildet, wodurch eine kontrollierte Verteilung des Futtermittels in Richtung auf die Entnahmerinne 6 gewährleistet wird.

### Bezugszeichenliste

- 1a: Hühnertränke
- 1b: Hühnerfuttermittelspender
- 2a, 2b: Vorratsbehälter
- 4: Behälterboden
- 5a, 5b: Deckelelement
- 6: Entnahmerinne
- 7: Außenwand (Entnahmerinne)
- 8: Öffnung (Vorratsbehälter)
- 9: Innenraum (Vorratsbehälter)
- 10a, 1ob: Verbindungsabschnitt (Ausnehmung)
- 11: Längsseitenwand
- 12: Kurzseitenwände
- 13: Stützelemente
- 14: Bodenöffnung
- 15: Verschlusselement
- 16: Tragegriff
- 17a, 17b: Anschlussabschnitt
- 18: Kopplungselemente (Halter)
- 19: Ausnehmungen (Halter)
- 20: Haltesteg
- 21: Randkörper
- 22: Laschen
- 23: Aussparung
- 24: Stützstege
- 25: Gitter

## Patentansprüche

1. Nahrungsmittelautomat für Kleintiere, insbesondere Hühner, mit
- einem haubenförmigen Vorratsbehälter (2a, 2b) mit einem Innenraum (9), der durch eine umlaufende Seitenwand (11, 12), einen einerseits stirnseitig an die Seitenwand (11, 12) anschließenden Behälterboden (4) und eine dem Behälterboden (4) gegenüberliegende Öffnung (8) begrenzt ist und
- einem in einer Gebrauchsposition die Öffnung (8) überdeckend lösbar an dem Vorratsbehälter (2a, 2b)anordbaren Deckelelement (5a, 5b) mit einer den Vorratsbehälter (2a, 2b) in der Gebrauchsposition im Bereich der Öffnung (8) zumindest abschnittsweise umgebenden Entnahmerinne (6), deren Außenwand (7) sich in der Gebrauchsposition bevorzugt über eine durch die Öffnung (8) gebildete Ebene hinaus in Richtung auf den Behälterboden (4) erstreckt und einem die Entnahmerinne (6) mit dem Innenraum (9) verbindenden Verbindungsabschnitt (10a, 10b),
**dadurch gekennzeichnet, dass**
das Deckelelement (5a, 5b) und der Vorratsbehälter (2a, 2b) in ihren Abmessungen derart aufeinander abgestimmt sind, dass das Deckelelement (5a, 5b) in einer Transportposition innerhalb des Innenraums (9) positionierbar ist.

2. Nahrungsmittelautomat nach Anspruch 1, **dadurch gekennzeichnet, dass**
- der Abstand zwischen dem Behälterboden (4) und der Öffnung (8) in Längsachsenrichtung des Vorratsbehälters (2a, 2b) größer ist als die Länge des Deckelelements (5a, 5b) und
- die Seitenwände (11, 12) des Vorratsbehälters (2a, 2b) senkrecht zu dessen Längsachsenrichtung zumindest abschnittsweise einen Abstand voneinander aufweisen, der größer ist als die Breite des Deckelelements (5a, 5b).

3. Nahrungsmittelautomat nach Anspruch 1 oder 2, **dadurch gekennzeichnet, dass** der Vorratsbehälter (2a, 2b) und das Deckelelement (5a, 5b) einen im wesentlichen rechteckigen Querschnitt aufweisen, wobei der Abstand der Seitenwände (11, 12) im Bereich einer senkrecht zur Längsachse verlaufende Diagonalen durch den durch zwei Längsseitenwände (11) und zwei Kurzseitenwände (12) gebildeten Vorratsbehälter (2a, 2b), größer ist als die Breite des Deckelelements (5a, 5b).

4. Nahrungsmittelautomat nach einem oder mehreren der vorhergehenden Ansprüche, **gekennzeichnet durch** lösbar mit dem Deckelelement (5a, 5b) verbindbare Stützelemente (13).

5. Nahrungsmittelautomat nach einem oder mehreren der vorhergehenden Ansprüche, **dadurch gekennzeichnet, dass** der Behälterboden (4) eine Bodenöffnung (14) aufweist, die mittels eines lösbar mit dem Vorratsbehälter (2b) verbindbaren Verschlusselements (15) verschließbar ist.

6. Nahrungsmittelautomat nach einem oder mehreren der vorhergehenden Ansprüche, **dadurch gekennzeichnet, dass** der Vorratsbehälter (2a, 2b) im Bereich des Behälterbodens (4) einen lösbar mit dem Vorratsbehälter (2a, 2b) verbindbaren Tragegriff (16) aufweist.

7. Nahrungsmittelautomat nach einem oder mehreren der vorhergehenden Ansprüche, **dadurch gekennzeichnet, dass** der Innenraum (9) zur Aufnahme des Verschlusselements (15) und/oder der Stützelemente (13) und/oder des Tragegriffs (16) in der Transportposition ausgebildet ist.

8. Nahrungsmittelautomat nach einem oder mehreren der vorhergehenden Ansprüche, **dadurch gekennzeichnet, dass** die Entnahmerinne (6) den Vorratsbehälter (2a, 2b) im Bereich der Öffnung (8) vollständig umschließt.

9. Nahrungsmittelautomat nach einem oder mehreren der vorhergehenden Ansprüche, **dadurch gekennzeichnet, dass** das Deckelelement (5a, 5b) einen Anschlussabschnitt (17a, 17b) aufweist, der zur lösbaren Befestigung des Deckelelements (5a, 5b) an dem Vorratsbehälter (2a, 2b) in der Gebrauchsposition ausgebildet ist.

10. Nahrungsmittelautomat nach einem oder mehreren der vorhergehenden Ansprüche, **dadurch gekennzeichnet, dass** der Anschlussabschnitt (17a, 17b) Kopplungselemente (18) zur formschlüssigen Verbindung des Deckelelements (5a, 5b) an dem Vorratsbehälter (2a, 2b) in der Gebrauchsposition aufweist.

11. Nahrungsmittelautomat nach einem oder mehreren der vorhergehenden Ansprüche, **dadurch gekennzeichnet, dass** die Kopplungselemente durch Halter (18) mit nutförmigen Ausnehmungen (19) zur Aufnahme von Haltestegen (20) an dem Vorratsbehälter (2a, 2b) gebildet sind.

12. Nahrungsmittelautomat nach einem oder mehreren der vorhergehenden Ansprüche, **dadurch gekennzeichnet, dass** das Deckelelement (5a, 5b) derart ausgebildet ist, dass der Anschlussabschnitt (17b) in der Gebrauchsposition beabstandet von dem umlaufenden Rand der Öffnung (8) angeordnet ist.

13. Nahrungsmittelautomat nach einem oder mehreren der vorhergehenden Ansprüche, **dadurch gekennzeichnet, dass** der Anschlussabschnitt (17b) einen in der Gebrauchsposition pyramidenförmig in Richtung auf die Öffnung (8) vorstehenden Bereich aufweist.

14. Nahrungsmittelautomat nach einem oder mehreren der vorhergehenden Ansprüche, **dadurch gekennzeichnet, dass** der Anschlussabschnitt (17a) dazu ausgebildet ist, in der Gebrauchsposition
- den Vorratsbehälter (2a) flüssigkeitsdicht zu verschließen und
- den Innenraum (9) mit der Entnahmerinne (6) über einen als Ausnehmung (10a) ausgebildeten Verbindungsabschnitt flüssigkeitsleitend zu verbinden.

15. Nahrungsmittelautomat nach einem oder mehreren der vorhergehenden Ansprüche, **dadurch gekennzeichnet, dass** der Anschlussabschnitt (17a) einen in der Gebrauchsposition über die Öffnung (8) in Richtung auf den Behälterboden (4) umlaufenden Randkörper (21) aufweist.

## Claims

1. Food dispenser for small animals, in particular chickens, with
- a hood-shaped storage container (2a, 2b) with an interior space (9) bounded by a surrounding side wall (11, 12), a container base (4) adjoining the side wall (11, 12) on one end side, and an opening (8) opposite the container base (4), and
- a lid element (5a, 5b) which can be detachably arranged on the storage container (2a, 2b) in a use position covering the opening (8), with a removal trough (6) which at least partially surrounds the storage container (2a, 2b) in the use position in the area of the opening (8), the outer wall (7) of which preferably extends beyond a plane formed by the opening (8) in the direction of the container base (4) in the use position, and a connection section (10a, 10b) connecting the removal trough (6) with the interior space (9),
**characterized in that**
the lid element (5a, 5b) and the storage container (2a, 2b) are matched in their dimensions in such a way that the lid element (5a, 5b) can be positioned within the interior space (9) in a transport position.

2. Food dispenser according to claim 1, **characterized in that**
- the distance between the container base (4) and the opening (8) in the longitudinal axis direction of the storage container (2a, 2b) is greater than the length of the lid element (5a, 5b) and
- the side walls (11, 12) of the storage container (2a, 2b) which are perpendicular to its longitudinal axis direction, at least in sections, have a distance between them that is greater than the width of the lid element (5a, 5b).

3. Food dispenser according to claim 1 or 2, **characterized in that** the storage container (2a, 2b) and the lid element (5a, 5b) have an essentially rectangular cross section, wherein the distance between the side walls (11, 12) in the area of a diagonal line running perpendicular to the longitudinal axis through the storage container (2a, 2b) formed by two longitudinal side walls (11) and two short side walls (12) is greater than the width of the lid element (5a, 5b).

4. Food dispenser according to one or more of the preceding claims, **characterized by** support elements (13) that can be detachably connected to the lid element (5a, 5b).

5. Food dispenser according to one or more of the preceding claims, **characterized in that** the container base (4) has a bottom opening (14) which can be closed by means of a closure element (15) that can be detachably connected to the storage container (2b).

6. Food dispenser according to one or more of the preceding claims, **characterized in that** the storage container (2a, 2b) has a carrying handle (16) in the area of the container base (4) which can be detachably connected to the storage container (2a, 2b).

7. Food dispenser according to one or more of the preceding claims, **characterized in that** the interior space (9) is designed to accommodate the closure element (15) and/or the support elements (13) and/or the carrying handle (16) in the transport position.

8. Food dispenser according to one or more of the preceding claims, **characterized in that** the removal trough (6) completely encloses the storage container (2a, 2b) in the area of the opening (8).

9. Food dispenser according to one or more of the preceding claims, **characterized in that** the lid element (5a, 5b) has a connecting section (17a, 17b) which is designed for detachable fastening of the lid element (5a, 5b) to the storage container (2a, 2b) in the use position.

10. Food dispenser according to one or more of the preceding claims, **characterized in that** the connecting section (17a, 17b) has coupling elements (18) for form-fitting connection of the lid element (5a, 5b) to the storage container (2a, 2b) in the use position.

11. Food dispenser according to one or more of the preceding claims, **characterized in that** the coupling elements are formed by holders (18) with groove-shaped recesses (19) for receiving retaining bars (20) on the storage container (2a, 2b).

12. Food dispenser according to one or more of the preceding claims, **characterized in that** the lid element (5a, 5b) is designed such that the connecting section (17b) is spaced apart from the surrounding edge of the opening (8) in the use position.

13. Food dispenser according to one or more of the preceding claims, **characterized in that** the connecting section (17b) has an area which, in the use position, protrudes pyramidally toward the opening (8).

14. Food dispenser according to one or more of the preceding claims, **characterized in that** the connecting section (17a) is designed to, in the use position.
- to close the storage container (2a) in a liquid-tight manner and
- connect the interior space (9) to the removal trough (6) in a liquid-conducting manner via a connection section designed as a recess (10a).

15. Food dispenser according to one or more of the preceding claims, **characterized in that** the connecting section (17a) has an edge body (21) which, in the use position, extends around the opening (8) in the direction of the container base (4).

## Revendications

1. Distributeur automatique d'alimentaires pour petit animaux, notament des poules, avec
- un réservoir de stockage en forme de capot (2a, 2b) avec un espace intérieur (9) délimité par une paroi latérale périphérique (11, 12), un fond de réservoir (4) raccordé d'un côté à la paroi latérale (11, 12) et une ouverture (8) opposée au fond du réservoir (4) et
- un élément de couvercle (5a, 5b) pouvant être disposé de manière amovible sur le réservoir de stockage (2a, 2b) en recouvrant l'ouverture (8) dans une position d'utilisation; avec une goulotte de prélèvement (6) entourant au moins partiellement le réservoir de stockage (2a, 2b) dans la position d'utilisation au niveau de l'ouverture (8), dont la paroi extérieure (7) s'étend de préférence, en position d'utilisation, au-delà d'un plan formé par l'ouverture (8) en direction du fond du réservoir (4), et une partie de liaison (10a, 10b) reliant la goulotte de prélèvement (6) à l'espace intérieur (9),
**caractérisé en ce que**
les dimensions de l'élément de couvercle (5a, 5b) et du réservoir de stockage (2a, 2b) sont adaptées l'une à l'autre de telle sorte que l'élément de couvercle (5a, 5b) peut être positionné à l'intérieur de l'espace intérieur (9) dans une position de transport.

2. Distributeur automatique d'alimentaires selon la revendication 1, **caractérisé en ce que**
- la distance entre le fond du réservoir (4) et l'ouverture (8) dans le sens longitudinal du réservoir de stockage (2a, 2b) est supérieure à la longueur de l'élément de couvercle (5a, 5b) et
- les parois latérales (11, 12) du réservoir de stockage (2a, 2b) présentent, perpendiculairement à l'axe longitudinal de celui-ci, au moins par sections, une distance l'une par rapport à l'autre qui est supérieure à la largeur de l'élément de couvercle (5a, 5b).

3. Distributeur automatique d'alimentaires selon la revendication 1 ou 2, **caractérisé en ce que** le réservoir de stockage (2a, 2b) et l'élément de couvercle (5a, 5b) présentent une section transversale essentiellement rectangulaire, la distance entre les parois latérales (11, 12) dans la zone d'une diagonale perpendiculaire à l'axe longitudinal à travers le réservoir de stockage (2a, 2b) formé par deux parois latérales longitudinales (11) et deux parois latérales courtes (12) est supérieure à la largeur de l'élément de couvercle (5a, 5b).

4. Distributeur automatique d'alimentaires selon une ou plusieurs des revendications précédentes, **caractérisé par** des éléments de support (13) pouvant être reliés de manière amovible à l'élément de couvercle (5a, 5b).

5. Distributeur automatique d'alimentaires selon une ou plusieurs des revendications précédentes, **caractérisé en ce que** le fond du réservoir (4) présente une ouverture (14) qui peut être fermée à l'aide d'un élément de fermeture (15) pouvant être relié de manière amovible au réservoir de stockage (2b).

6. Distributeur automatique d'alimentaires selon une ou plusieurs des revendications précédentes, **caractérisé en ce que** le réservoir de stockage (2a, 2b) présente, dans la zone du fond du réservoir (4), une poignée de transport (16) pouvant être reliée de manière amovible au réservoir de stockage (2a, 2b).

7. Distributeur automatique d'alimentaires selon une ou plusieurs des revendications précédentes, **caractérisé en ce que** l'espace intérieur (9) est conçu pour recevoir l'élément de fermeture (15) et/ou les éléments de support (13) et/ou la poignée de transport (16) en position de transport.

8. Distributeur automatique d'alimentaires selon une ou plusieurs des revendications précédentes, **caractérisé en ce que** la goulotte de prélèvement (6) entoure complètement le réservoir de stockage (2a, 2b) dans la zone de l'ouverture (8).

9. Distributeur automatique d'alimentaires selon une ou plusieurs des revendications précédentes, **caractérisé en ce que** l'élément de couvercle (5a, 5b) présente une partie de raccordement (17a, 17b) qui est conçue pour la fixation amovible de l'élément de couvercle (5a, 5b) sur le réservoir de stockage (2a, 2b) dans la position d'utilisation.

10. Distributeur automatique d'alimentaires selon une ou plusieurs des revendications précédentes, **caractérisé en ce que** la partie de raccordement (17a, 17b) comporte des éléments d'accouplement (18) pour la liaison par complémentarité de forme de l'élément de couvercle (5a, 5b) au réservoir de stockage (2a, 2b) en position d'utilisation.

11. Distributeur automatique d'alimentaires selon une ou plusieurs des revendications précédentes, **caractérisé en ce que** les éléments d'accouplement sont formés par des supports (18) avec des évidements en forme de rainures (19) destinés à recevoir des barrettes de retenue (20) sur le réservoir de stockage (2a, 2b).

12. Distributeur automatique d'alimentaires selon une ou plusieurs des revendications précédentes, **caractérisé en ce que** l'élément de couvercle (5a, 5b) est conçu de telle sorte que la partie de raccordement (17b) est disposée à distance du bord périphérique de l'ouverture (8) dans la position d'utilisation.

13. Distributeur automatique d'alimentaires selon une ou plusieurs des revendications précédentes, **caractérisé en ce que** la partie de raccordement (17b) présente, en position d'utilisation, une zone en saillie en forme de pyramide en direction de l'ouverture (8).

14. Distributeur automatique d'alimentaires selon une ou plusieurs des revendications précédentes, **caractérisé en ce que** la partie de raccordement (17a) est conçue pour, en position d'utilisation
- fermer le réservoir de stockage (2a) de manière étanche aux liquides et
- de relier l'espace intérieur (9) à la goulotte de prélèvement (6) de manière à conduire les liquides par l'intermédiaire d'une section de liaison réalisée sous la forme d'un évidement (10a).

15. Distributeur automatique d'alimentaires selon une ou plusieurs des revendications précédentes, **caractérisé en ce que** la partie de raccordement (17a) présente un corps de bordure (21) qui, en position d'utilisation, s'étend autour de l'ouverture (8) en direction du fond du réservoir (4).
